# EUROPÄISCHE PATENTSCHRIFT

(11) **EP 2 192 061 B1**
(45) Veröffentlichungstag und Bekanntmachung des Hinweises auf die Patenterteilung: **08.05.2013**
(21) Anmeldenummer: 09164553.1
(22) Anmeldetag: 03.07.2009
(51) Int. Cl.: B65G 47/51

(54) **Vorrichtung zur Übernahme, Zwischenspeicherung und Weitergabe von länglichen, hohlzylindrischen Produkteinheiten sowie Verfahren zum Betrieb einer solchen Vorrichtung**
Device for transferring, intermediate storage and forwarding of lengthwise, hollow cylinder product units and method of operating such a device
Dispositif de transfert, de stockage intermédiaire et de transmission de produits unitaires longitudinaux et cylindriques creux ainsi que procédé de fonctionnement d'un tel dispositif

(30) Priorität: 01.12.2008 CH 18812008
(43) Veröffentlichungstag der Anmeldung: 02.06.2010
(73) Patentinhaber: Texa AG, 7023 Haldenstein (CH); Boxal Netherlands B.V., 3900 BM Veenendaal (NL)
(72) Erfinder: Benz, Gottlieb, 8890 Flums (CH); Robbertsen, Albertus, 3901 DR Veenendaal (NL)
(74) Vertreter: Schneider Feldmann AG Patent- und Markenanwälte

(56) Entgegenhaltungen:
- DE-U1-202004 008 678
- GB-A- 1 177 942
- GB-A- 2 203 404
- JP-A- 11 309 406

## Beschreibung

Die Erfindung betrifft eine Vorrichtung zur Übernahme, Zwischenspeicherung und Weitergabe von länglichen, hohlzylindrischen Produkteinheiten nach Patentanspruch 1 sowie ein Verfahren zum Betrieb einer solchen Vorrichtung nach Patentanspruch 6.

Die Erfindung betrifft insbesondere eine Vorrichtung und ein Verfahren zur Übernahme, Zwischenspeicherung und Weitergabe von Tuben, Hülsen, Dosen oder ähnlichen Produkteinheiten, die von einer Produktionslinie kommen und die an einer nachgeschalteten Arbeitsstation verarbeitet oder weiter bearbeitet werden. Die erfindungsgemässe Vorrichtung wird somit im Folgenden auch abgekürzt als 'Zwischenspeichereinrichtung' bezeichnet.

Wesentliche Bestandteile einer solchen Zwischenspeichereinrichtung sind unter anderem:
- eine anliefernden Fördereinrichtung in der Form eines ersten Transportbandes,
- eine kontinuierlich ausliefernden Fördereinrichtung in der Form eines zweiten Transportbandes, wobei das erste und das zweite Transportband in einer Übergabezone horizontal übereinanderliegend angeordnet sind, und
- ein Zwischenspeicher, der in der Übergabezone angeordnet ist.

Der Zweck einer solchen Zwischenspeichereinrichtung besteht grundsätzlich darin, einer kontinuierlich ausliefernden Fördereinrichtung - die ihrerseits beispielsweise eine nachfolgende Verarbeitungs- oder Abpackeinheit mit zu verarbeitenden Produkteeinheiten speist - stets lückenlos aneinandergereihte Produkteeinheiten zur Verfügung zu stellen. Im Falle von Überschüssen bei der Zulieferung können die Produkteeinheiten zeitweise in den Zwischenspeicher umgeleitet werden und im Falle von Lücken in der Zulieferung können Produkteeinheiten dem Zwischenspeicher entnommen werden.

Zwischenspeicherfunktionen sind in Produktionslinien von besonderer Bedeutung. Es geht zum Beispiel auch darum, beim Stillstand einer nachfolgenden Verarbeitungs- oder Abpackeinheit die Abnahme von Produkteeinheiten aus den vorgeschalteten Produktionseinheiten sicher zu stellen, damit die Produktion als Ganzes nicht gestoppt werden muss. Derartige Stillstandzeiten kommen nicht nur bei Fehlmanipulationen oder Defekten vor, sondern sind zum Teil auch völlig regulär, z.B. bei der Umstellung von einer Grösse oder Form von Produkteeinheiten oder Verpackungseinheiten auf eine andere Grösse oder Form. Das kann verschiedene weitere Anpassungen erfordern, so etwa bei Trägern, Greifern oder Dornen zum Erfassen von Produkteeinheiten in verschiedenen Stationen einer Produktionslinie. Steht andererseits eine Station weiter vorne in der Produktionslinie still, so können die nachfolgenden Stationen zeitweise aus dem Zwischenspeicher gespiesen werden. Häufig ist es auch so, dass die einzelnen Stationen gesteuert unterschiedlich schnell arbeiten können um die vorhandenen Zwischenspeicher zu füllen oder zu leeren.

Die EP-1 114 784 zeigt eine Vorrichtung zur Übernahme von länglichen, mindestens annähernd zylindrischen Produkteinheiten, insbesondere von Tuben, Hülsen oder Dosen, die kontinuierlich von einer Produktionslinie kommen. Die Vorrichtung dient zur Bildung von Produktegruppen mit einer vorwählbaren Einheitenanzahl. Sie weist eine kontinuierlich anliefernde Fördereinheit und ein die Produktegruppen aufnehmendes und in eine Abschiebeposition förderndes Transportband mit Produktaufnahmen auf. Die Fördereinheit und das Transportband weisen zudem eine gemeinsame Übergabestrecke auf, in der sie distanziert parallel zueinander verlaufen. Im Bereich der Übergabestrecke ist eine grössenvariable Ablagefläche zwischen der Fördereinheit und dem Transportband angeordnet, die nach Massgabe der zu bildenden Produktgruppen bewegbar ist. Die grössenvariable Ablagefläche ist als flexibler Bandabschnitt ausgestaltet, was in einem eingeschränkten Sinn als Zwischenspeicherfunktion gesehen werden kann. Ein wesentlicher Nachteil dieser Vorrichtung ist jedoch, dass die verfügbare Zwischenspeicherkapazität sehr gering ist, weil der Hauptzweck dieser Vorrichtung nicht in der Zwischenspeicherung sondern in der Bildung von Produktegruppen liegt.

Zwischenspeichereinrichtungen oder Kompensatoren mit grösserer Aufnahmekapazität sind ebenfalls bekannt. Dabei handelt es sich meist um Einrichtungen mit mäandernden Ketten, an denen gondelartige Schalen befestigt sind, die Produkteinheiten aufnehmen können. Ein Beispiel eines solchen Kompensators ist in der EP-0 438 974 beschrieben. Ein Beispiel einer Zwischenspeichereinrichtung mit Fördereinrichtungen auf verschiedenen Ebenen ist aus der DE-202004008678 bekannt.

Es ist die Aufgabe der Erfindung, eine verbesserte Zwischenspeichereinrichtung sowie ein Verfahren zu deren Betrieb anzugeben.

Diese Aufgabe wird durch die Merkmalskombinationen in den Patentansprüchen 1 und 6 gelöst.

Die Verbesserungen werden erreicht, indem man als Zwischenspeicher eine Hochregal-Speichereinrichtung oder eine Paternoster-Speichereinrichtung vorsieht und einen Handlingroboter im Bereich der Übergabezone zwischen den Fördereinrichtungen und dem Zwischenspeicher anordnet. Zudem ist der Handlingroboter dazu ausgelegt, entweder (a) eine Anzahl von Produkteeinheiten vom ersten Transportband zu nehmen und dem zweiten Transportband oder dem Zwischenspeicher zuzuführen, oder (b) eine Anzahl von Produkteeinheiten dem Zwischenspeicher zu entnehmen und dem zweiten Transportband zuzuführen.

Weil sowohl das erste wie auch das zweite Transportband während dieser Vorgänge zumeist in Bewegung sind, muss das Verfahren zum Betrieb einer solchen Vorrichtung vorsehen, dass der Handlingroboter sowohl in Position wie auch in Geschwindigkeit eine Angleichung an das jeweilige Transportband vornehmen kann.

Die Vorteile einer solchen Anordnung und Realisierung bestehen zunächst darin, dass die Zwischenspeicherkapazität wesentlich erhöht wird und der Platzbedarf in der Linie (Produktionslinie bzw. Weiterverarbeitungslinie) wesentlich geringer (kürzere Zwischenspeichereinrichtungen) ist. Weiterhin kann sowohl für den Zwischenspeicher (Hochregal-Speichereinrichtung oder Paternoster-Speichereinrichtung) wie auch für den Handlingroboter auf gängige im Handel erhältliche Lösungen für entsprechende Basiskomponenten zurückgegriffen werden. Schliesslich sind somit sowohl hinsichtlich mechanischer wie auch steuerungsmässiger Anpassungen in bestehenden Produktionslinien keine übermässigen Aufwendungen erfordern.

Geeignete Hochregal-Speichersysteme sind z.B. die Lean-Lift- und Hochregal Systeme der Firma Hänel, die mit einem rechnergesteuerten Positionierlift arbeiten und mit denen vorhandene Raumhöhen sehr gut ausgenützt werden können.

Geeignete Paternoster-Speichereinrichtungen werden beispielsweise von der Firma Texa angeboten. Es handelt sich dabei um Paternoster-Speichereinrichtungen mit Behälterführungen, die beim Anfahren und Stoppen des Paternosters ein Pendeln der Speicherbehälter verhindern.

Geeignete Handlingroboter werden beispielsweise von Firmen wie ABB und Fanuc angeboten.

Da die Vorrichtung für das Handling von länglichen, hohlzylindrischen Produkteinheiten vorgesehen ist, bieten Erfassungsdorne eine Möglichkeit zur einfachen, zuverlässigen Erfassung und zum Transport. Komplizierte Greif- oder Haltevorrichtungen können somit entfallen. Durch die Wahl einer gewünschten Anzahl von gleichbeabstandet nebeneinanderliegenden Erfassungsdornen lässt sich die Menge an gleichzeitig transportierbaren Produkteinheiten sehr gut steuern. In der Praxis wird man die Anzahl der Erfassungsdorne natürlich auf die Dimensionierung der Speicherbehälter der Hochregal-Speichereinrichtung abstimmen.

Für den Handlingroboter sind dabei lineare Bewegungsmöglichkeiten mindestens in X,Y und Z-Richtung sowie je nach Bauweise auch eine Schwenkbewegungs-Möglichkeit um die parallel zur Förderrichtung der Transportbänder liegende Achse vorgesehen. Letzteres ermöglicht eine kompaktere Bauweise der Zwischenspeichereinrichtung, weil die Förderbänder und die Speichereinrichtungen dann näher beieinanderstehen können. Dies kann beim Einbau in bestehende Produktionslinien von Vorteil sein.

Als Speichereinrichtungen können, wie erwähnt, entweder Hochregal-Speichereinrichtungen oder Paternoster-Speichereinrichtungen eingesetzt werden. Je nach Situation und Erfordernissen kann hier eine geeignete Wahl getroffen werden. Bezüglich der Anordnung der Speichereinrichtungen relativ zu den beiden übereinanderliegenden Transportbändern ergeben sich ebenfalls verschiedene Möglichkeiten. So sind beispielsweise auch Lösungen mit Hochregal-Speichereinrichtungen möglich, bei denen der Handlingroboter keine Schwenkbewegungen auszuführen braucht.

Im Falle von Hochregal-Speichereinrichtungen kann zudem vorgesehen sein, die Speicherbehälter der Hochregal-Speichereinrichtung schwenkbar zu gestalten. Mit der Schwenkbarkeit der Speicherbehälter soll einerseits eine leichte Befüllbarkeit/Entnahme und andererseits ein sicherer Transport und Lagerung innerhalb des Zwischenspeichers erreicht werden.

Zur Befüllung bzw. Entnahme werden die Speicherbehälter in eine gegenüber der Vertikalen leicht geneigte Stellung geschwenkt. Dies ermöglicht eine sichere Befüllung, weil die eingefüllten länglichen, hohlzylindrischen Produkteinheiten infolge dieser Neigung dann nicht so leicht verrutschen.

Paternoster-Speichereinrichtungen hingegen entsprechen eher den gängigen und bisher bekannten Lösungen für Zwischenspeicher mit grösseren Speicherkapazitäten. Sie haben zwar den Nachteil, dass immer ganze Ketten von Speicherbehältern und damit auch grosse Massen in Bewegung gesetzt werden müssen, andererseits aber auch den Vorteil, dass eine Vielzahl von Speicherbehältern relativ einfach gleichzeitig umpositioniert werden können. Da die eingesetzten Zwischenspeichereinrichtungen pro Zeiteinheit immer grösser werdende Durchsätze von Produkteinheiten zu bewältigen haben, ist es von zunehmender Bedeutung, dass ganze Gruppen von Produkteinheiten gleichzeitig und sehr schnell in den Zwischenspeicher eingebracht oder aus dem Zwischenspeicher entnommen werden können. Dies wird natürlich erleichtert, wenn leere oder volle Speicherbehälter bereits in der Nähe bereitstehen oder laufend bereitgestellt werden. Paternoster-Lösungen, insbesondere solche mit mehr als einer Paternoster-Einheit, sind unter solchen Umständen von Vorteil.

Da es sich sowohl bei den Speichereinrichtungen wie auch beim Handlingroboter grundsätzlich um (zu modifizierende) Einkaufteile handelt, müssen deren Steuereinrichtungen in geeigneter Weise zusammengeschaltet und mit den Steuereinrichtungen für die Transportbänder verbunden werden. Grundsätzlich geschieht das in einer dem Fachmann bekannten Weise, es können aber getrennte oder vereinte Steuereinrichtungen für die verschiedenen Komponenten vorgesehen sein (so könnte jede oder einzelne der Komponenten für sich prozessorgesteuert sein und es könnte auch eine gemeinsame und übergeordnete Steuerungseinrichtung vorgesehen sein).

Das vorgesehene Konzept der Steuerung für die Zwischenspeichereinrichtung sieht vor, dass zumindest für eine Band-zu-Band Verschiebung von Produkteinheiten nur Linearbewegungen des Handlingroboter erforderlich sind. Derartige Bewegungen sind gut beherrschbar und lassen sich schnell und effizient ausführen. Eine grosse Effizienz erhält man mit einer grossen Anzahl gleichbeabstandet nebeneinanderliegender Erfassungsdorne. Die Erfassung mit den Erfassungsdornen ist zudem eine in der Praxis bereits bewährte Technologie.

Verschiebungen von Produkteinheiten vom Band zum Zwischenspeicher und vom Zwischenspeicher zum Band können je nach der vorzusehenden konstruktiven Lösung sowohl Linearbewegungen als auch Schwenkbewegungen des Handlingroboters umfassen. Bei Lösungen mit Schwenkbewegung erfolgt diese vorteilhaft um eine parallel zur Förderrichtung des ersten und des zweiten Transportbandes verlaufende Achse. Die Schwenkbewegung erfolgt dann um einen Winkel von annähernd 180° und sie wird von einer Linearbewegung unterbrochen. Die Unterbrechung der Schwenkbewegung erfolgt dabei vorzugsweise mit zumindest annähernd senkrecht aufgerichteten Erfassungsdornen, weil dann schnelle Linearbewegungen ausgeführt werden können ohne dass die Gefahr besteht, dass Produkteeinheiten von den Erfassungsdornen gleiten.

Im Folgenden wird die Erfindung anhand von zwei Ausführungsbeispielen mit Zeichnungen näher erläutert. Dabei zeigt
- Fig. 1: Eine Vorderansicht einer ersten Ausführungsform der Zwischenspeichereinrichtung mit einer Hochregal-Speichereinrichtung mit schematischer Darstellung zweier verschiedener Positionen des Handlingroboters,
- Fig. 2: die Zwischenspeichereinrichtung von Fig. 1 in einer Seitenansicht mit schematischer Darstellung dreier verschiedener Positionen des Handlingroboters,
- Fig. 3: eine Vorderansicht einer zweiten Ausführungsform der Zwischenspeichereinrichtung mit einer Paternoster- Speichereinrichtung mit schematischer Darstellung des Handlingroboters,
- Fig. 4: die Zwischenspeichereinrichtung von Fig. 3 in einer Ansicht von oben,
- Fig. 5: die Zwischenspeichereinrichtung von Fig. 3 in einer Seitenansicht mit schematischer Darstellung zweier verschiedener Positionen des Handlingroboters
- Fig. 6: eine vergrösserte Darstellung zweier verschiedener Positionen des Handlingroboters, und
- Fig. 7: eine räumliche Ansicht der Zwischenspeichereinrichtung gemäss Fig. 3.

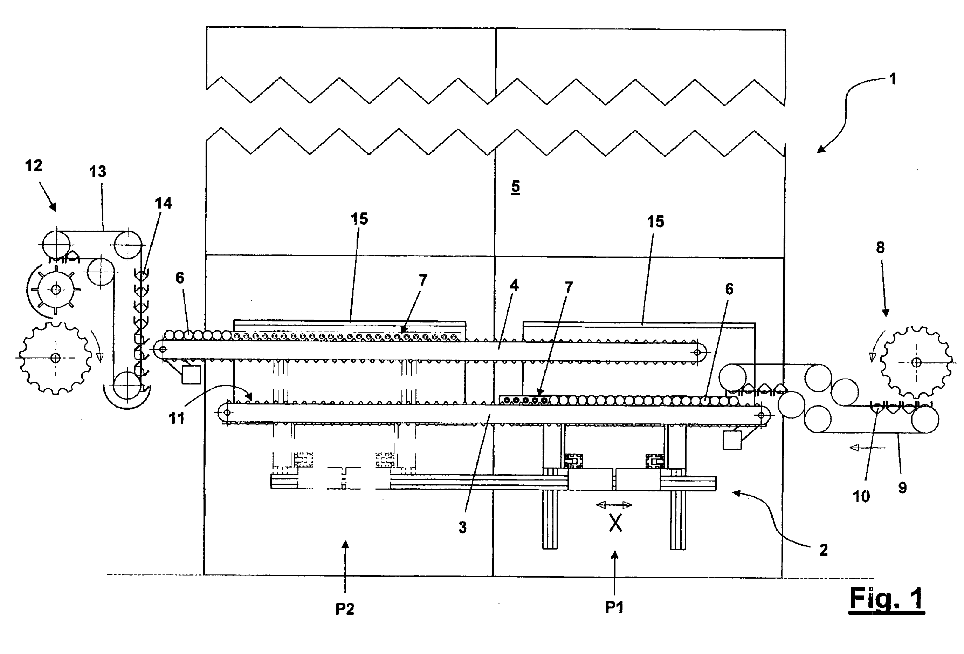

Die Figur 1 zeigt eine Vorderansicht einer erfindungsgemässen Zwischenspeichereinrichtung 1 mit schematischer Darstellung zweier verschiedener Positionen P1,P2 eines Handlingroboters 2. Die Zwischenspeichereinrichtung 1 hat eine anliefernden Fördereinrichtung in der Form eines ersten Transportbandes 3 und eine kontinuierlich ausliefernde Fördereinrichtung in der Form eines zweiten Transportbandes 4. Dabei sind das erste und das zweite Transportband 3,4 in einer Übergabezone horizontal übereinanderliegend angeordnet und ein Zwischenspeicher sowie der Handlingroboter 2 sind in der Übergabezone angeordnet. Der Zwischenspeicher ist dabei als Hochregal-Speichereinrichtung 5 ausgebildet.

Der Handlingroboter 2 ist dazu ausgelegt ist, entweder (a) eine Anzahl von länglichen, hohlzylindrischen Produkteeinheiten 6 vom ersten Transportband 3 zu nehmen und dem zweiten Transportband 4 oder der Hochregal-Speichereinrichtung 5 zuzuführen, oder (b) eine Anzahl der Produkteeinheiten 6 der Hochregal-Speichereinrichtung 5 zu entnehmen und dem zweiten Transportband 4 zuzuführen.

Zur Veranschaulichung ist in der Figur 1 schematisch eine erste Position P1 dargestellt, in der eine Erfassungseinrichtung 7 des Handlingroboters 2 eine Anzahl von Produkteinheiten 6 vom ersten Transportband 3 übernimmt. Zusätzlich ist schematisch eine zweite Position P2 in gestrichelten Linien dargestellt, in der die Erfassungseinrichtung 7 des Handlingroboters eine Anzahl von Produkteinheiten 6 an das zweite Transportband 4 weitergibt.

Gespiesen mit angelieferten Produkteinheiten 6 wird das erste Transportband 3 von einer Fördereinheit 8 mit einer umlaufenden Transportkette 9 und an der Transportkette 9 schwenkbeweglich gelagerten Fördergondeln 10. Aus diesen Fördergondeln 10 werden die zugelieferten Produkteinheiten 6 in leere Produktaufnahmen 11 auf dem ersten Transportband 3 abgelegt. Die meist muldenartigen Produktaufnahmen 11 stellen sicher, dass die Produkteinheiten 6 stets gleichbeabstandet auf dem ersten Transportband 3 ankommen und dort leicht erfassbar bereitliegen.

Gespiesen mit kontinuierlich ausgelieferten Produkteinheiten 6 wird eine weiteren Fördereinheit 12 vom zweiten Transportband 4. Auch hier gelangen Produkteinheiten 6 wiederum in an einer weiteren Transportkette 13 schwenkbeweglich gelagerte weitere Fördergondeln 14. Wie erwähnt, dient die Zwischenspeichereinrichtung 1 eben gerade dazu, diese kontinuierliche Auslieferung zu ermöglichen. Als kontinuierliche Auslieferung ist dabei zu verstehen, dass unterbrechungsfrei und lückenlos Produkteinheiten 6 zur weiteren Fördereinheit 12 gelangen. Im engeren Sinne soll kontinuierliche Auslieferung auch so verstanden werden, dass innerhalb von vorwählbaren Einheiten, sogenannten 'batches' jeweils unterbrechungsfrei und lückenlos Produkteinheiten 6 zur weiteren Fördereinheit 12 gelangen. In diesem Sinn könnte die Vorrichtung gemäss EP-1 114 784 durch die vorliegende erfindungsgemässe Zwischenspeichereinrichtung ersetzt werden.

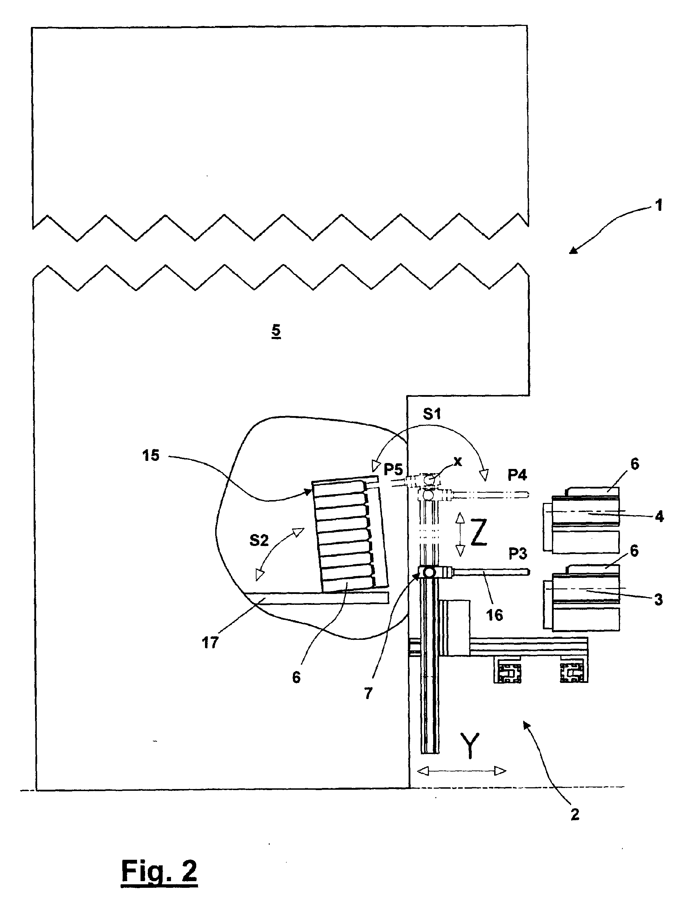

Weiterhin ersichtlich ist aus der Figur 1, dass der Handlingroboter 2 in verschiedenen Richtungen, so in der X-Richtung parallel zur Förderrichtung des ersten und des zweiten Transportbandes 3,4, linear bewegbar ist. Weitere Ausführungen zur Definition der hier verwendeten Richtungsbezeichnungen siehe Figur 2. Ebenfalls angedeutet ist die Lage und Anordnung von Speicherbehältern 15 in der in der Hochregal-Speichereinrichtung 5.

Die Figur 2 zeigt die Zwischenspeichereinrichtung 1 von Fig. 1 in einer Seitenansicht mit schematischer Darstellung dreier verschiedener Positionen P3,P4,P5 des Handlingroboters 2. Dabei kann die Position P3 der Position P1 (siehe Figur 1) entsprechen und die Position P4 kann der Position P2 (siehe Figur 1) entsprechen, also Positionen, in denen entweder dem ersten Transportband 3 Produkteinheiten 6 entnommen oder dem zweiten Transportband 4 Produkteinheiten 6 zugeführt werden. Beides kann natürlich an einem beliebigen Ort (innerhalb des Bewegungsbereichs des Handlingroboters) in X-Richtung erfolgen.

Weiterhin ist aus der Figur 2 ersichtlich, dass der Handlingroboter 2 zwischen den Transportbändern 3,4 und der Hochregal-Speichereinrichtung 5 angeordnet ist. Der Handlingroboter 2 verfügt ferner über lineare Bewegungsmöglichkeiten in Y- und Z-Richtung. Zudem ist die Erfassungsvorrichtung 7 des Handlingroboters 2 um eine x-Achse, die parallel zur X-Richtung verläuft, schwenkbar. Die mögliche Schwenkbewegung S1, die hier etwas mehr als 180° beträgt, ist mit einem Doppelpfeil angedeutet. Die Erfassungsvorrichtung 7 ist mit einer Reihe von gleichbeabstandeten Erfassungsdornen 16 bestückt (siehe dazu auch Figur 1). Die Abstände zwischen den Erfassungsdornen entsprechen dabei den Abständen zwischen den Produktaufnahmen 11 auf dem ersten bzw. dem zweiten Transportband 3,4. Die Erfassungsdorne 16 sind so dimensioniert, dass sie leicht in die Hohlräume der länglichen, hohlzylindrischen Produkteinheiten 6 eingreifen können. Die Produkteinheiten 6 sind, wie vorstehend bereits erwähnt, vorzugsweise Tuben, Hülsen oder Dosen.

Angedeutet ist in der Figur 2 auch eine Position P5 des Handlingroboters 2. In der Position P5 ist die Erfassungsvorrichtung 7 herumgeschwenkt und die Erfassungsdorne 16 zeigen in Richtung zur Hochregal-Speichereinrichtung 5. Gezeigt ist hier eine Stellung in der Produkteinheiten 6 gerade einem Speicherbehälter 15 entnommen oder gerade einem Speicherbehälter 15 zugeführt werden. Damit unter den hier dargestellten Platzverhältnissen zwischen den Transportbändern 3,4 und der Hochregal-Speichereinrichtung 5 ein Transfer von Produkteinheiten 6 von und zu den Transportbändern überhaupt möglich ist, muss der Handlingroboter 2 auch Bewegungen in Y-Richtung ausführen. Da Bewegungen in Y-Richtung für den Transfer von Produkteinheiten 6 vom ersten Transportband 3 zum zweiten Transportband 4 ohnehin vorgesehen und notwendig sind, kann diese Bewegungsfreiheit gleichzeitig auch zur Realisierung der besonders kompakten Bauweise der gesamten Zwischenspeichereinrichtung 1 ausgenützt werden (siehe auch Kurzbeschreibung der Ablaufsequenz weiter unten).

In der Hochregal-Speichereinrichtung 5 werden spezielle schwenkbare Speicherbehälter 15 für die Produkteinheiten 6 eingesetzt, wovon einer hier schematisch in der Beladungs- bzw. Entladungsposition dargestellt ist. Der Speicherbehälter 15 befindet sich in einer Schublade 17 der Hochregal-Speichereinrichtung 5. Der Speicherbehälter 15 ist ein einseitig offener Behälter, der in einer ersten Schwenkstellung (wie dargestellt) zwecks Beladung bzw. Entladung leicht geneigt auf einer seiner Seitenflächen steht. In einer zweiten Schwenkstellung steht der Speicherbehälter 15 dann zwecks Lagerung und Transport innerhalb der Hochregal-Speichereinrichtung 5 auf seiner Grundfläche (nicht dargestellt). Die mögliche Schwenkbewegung S2 zwischen der ersten und der zweiten Schwenkstellung ist ebenfalls mit einem Doppelpfeil bezeichnet.

Die nachstehenden Kurzbeschreibungen von Ablaufsequenzen beschränken sich auf die wichtigsten auftretenden Vorgänge und Bewegungen am Beispiel der ersten Ausführungsform der Erfindung gemäss den Figuren 1 und 2.

Die Ablaufsequenz für die Entnahme einer Anzahl von Produkteinheiten 6 vom ersten Transportband 3 und Zuführung dieser Produkteinheiten 6 zum zweiten Transportband 4 ist im wesentlichen wie folgt:
- Angleichung von Position und Geschwindigkeit der Erfassungseinrichtung 7 des Handlingroboters an das erste Transportband 3; im speziellen an die auf dem ersten Transportband 3 liegenden Produkteinheiten 6 (vgl. dazu Positionen P1 bzw. P3)
- Bewegung der Erfassungseinrichtung 7 in Y-Richtung mit Einführung der Erfassungsdorne 16 in Hohlräume der hohlzylindrischen Produkteinheiten 6,
- Bewegung der Erfassungseinrichtung 7 in Z-Richtung mit leichtem Anheben der nunmehr erfassten Produkteinheiten,
- Bewegung der Erfassungseinrichtung 7 in Y-Richtung zwecks Entnahme aus dem Bereich des ersten Transportbandes,
- Bewegung der Erfassungseinrichtung 7 in Z-Richtung zwecks Verschiebung auf die Höhe des zweiten Transportbandes 4,
- Angleichung von Position und Geschwindigkeit der Erfassungseinrichtung 7 des Handlingroboters an das zweite Transportband 4; im speziellen an die bereits auf dem zweiten Transportband 4 liegenden Produkteinheiten 6 zwecks lückenloser Aneinanderreihung (vgl. dazu Positionen P2 bzw. P4)
- Bewegung der Erfassungseinrichtung 7 in Y-Richtung zu den und über die Produktaufnahmen 11 auf dem zweiten Transportband 4,
- Bewegung der Erfassungseinrichtung 7 in Z-Richtung zwecks Ablage der Produkteinheiten auf dem zweiten Transportband 4,
- Bewegung der Erfassungseinrichtung 7 in Y-Richtung zwecks Rückzug der Erfassungsdorne 16 aus den Produkteinheiten 6. Anschliessend Bereitschaftserstellung für eine neue Ablaufsequenz.

Die Ablaufsequenz für die Entnahme einer Anzahl von Produkteinheiten 6 vom ersten Transportband 3 und Zuführung dieser Produkteinheiten 6 zur Hochregal-Speichereinrichtung 5 ist im wesentlichen wie folgt:
- Angleichung von Position und Geschwindigkeit der Erfassungseinrichtung 7 des Handlingroboters an das erste Transportband 3; im speziellen an die auf dem ersten Transportband 3 liegenden Produkteinheiten 6 (vgl. dazu Positionen P1 bzw. P3)
- Bewegung der Erfassungseinrichtung 7 in Y-Richtung mit Einführung der Erfassungsdorne 16 in Hohlräume der hohlzylindrischen Produkteinheiten 6,
- Bewegung der Erfassungseinrichtung 7 in Z-Richtung mit leichtem Anheben der nunmehr erfassten Produkteinheiten,
- Bewegung der Erfassungseinrichtung 7 in Y-Richtung zwecks Entnahme aus dem Bereich des ersten Transportbandes,
- Schwenkbewegung der Erfassungseinrichtung 7 in eine Position, in der die Erfassungsdorne 16 im wesentlichen senkrecht nach oben zeigen,
- Bewegung der Erfassungseinrichtung 7 in Y-Richtung zwecks Positionierung des Handlingroboters 2 in einer Stellung, die die Beladung eines Speicherbehälters 15 erlaubt,
- Schwenkbewegung der Erfassungseinrichtung 7 in eine Position, in der die Erfassungsdorne 16 im wesentlichen in die Richtung zur Hochregal-Speichereinrichtung 5 zeigen,
- Positionierung der Erfassungseinrichtung in X- und Z-Richtung in Bezug auf den Speicherbehälter 15 bzw. auf die im Speicherbehälter 15 bereits abgelegten (Lagen von) Produkteinheiten 6,
- Bewegung der Erfassungseinrichtung 7 in Y-Richtung zu und über die im Speicherbehälter 15 bereits abgelegten Produkteinheiten 6 und anschliessende Ablage der neu hinzuzufügenden Produkteinheiten 6 (vgl. dazu Position 5 / Figur 2).
- Bewegung der Erfassungseinrichtung 7 in Y-Richtung zwecks Rückzug der Erfassungsdorne 16 aus den Produkteinheiten 6. Anschliessend Bereitschaftserstellung für eine neue Ablaufsequenz.

Die Ablaufsequenz für die Entnahme einer Anzahl von Produkteinheiten 6 von der Hochregal-Speichereinrichtung 5 und die Zuführung dieser Produkteinheiten 6 zum zweiten Transportband 4 verwendet naturgemäss Ablaufsequenzschritte wie oben beschrieben, teilweise aber in umgekehrter Reihenfolge.

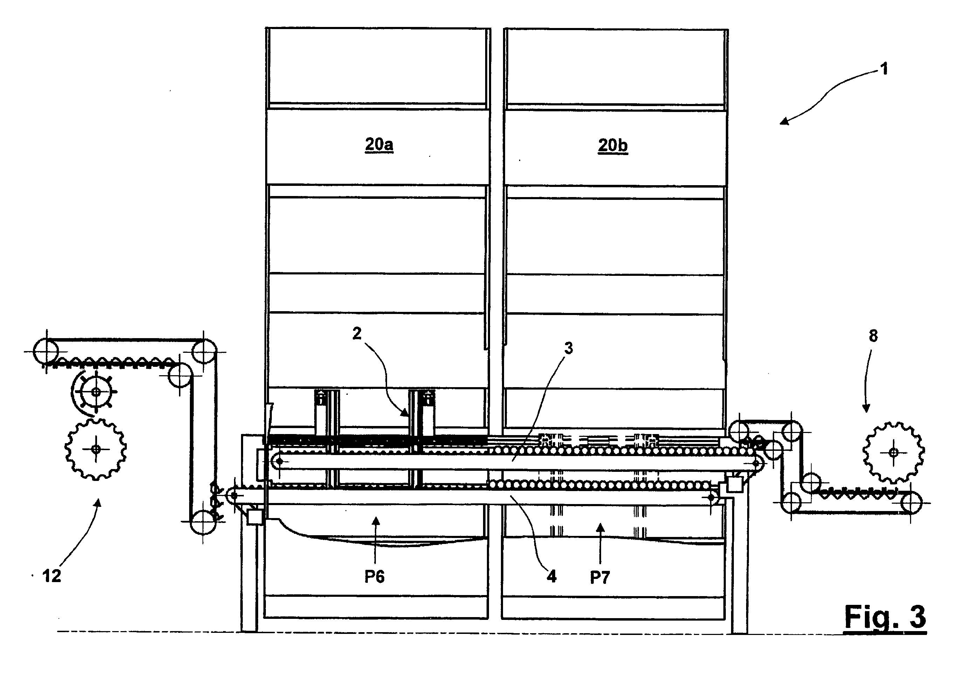

Die Fig. 3 zeigt eine Vorderansicht einer zweiten Ausführungsform der Zwischenspeichereinrichtung 1 mit einer Paternoster-Speichereinrichtung mit schematischer Darstellung des Handlingroboters 2. Die Darstellung entspricht im weitgehend derjenigen von Fig. 1, wobei hier allerdings das erste (anliefernde) Transportband 3 über dem zweiten (ausliefernden) Transportband 4 angeordnet ist. Das ist für die grundsätzliche Funktion der Zwischenspeichereinrichtung aber nicht von Belang. Die Paternoster-Speichereinrichtung besteht aus zwei nebeneinanderstehenden Paternoster-Einheiten 20a,b. Angedeutet sind auch hier in schematischer Weise zwei Positionen P6,P7 des Handlingroboters 2, wobei P6 (ausgezogene Linien) die Lage des Handlingroboters 2 bei der Übernahme von Produkteinheiten 6 vom ersten Transportband 3 und P7 die Lage des Handlingroboters 2 bei der Übergabe von Produkteinheiten 6 an das zweite Transportband 4 andeutet.

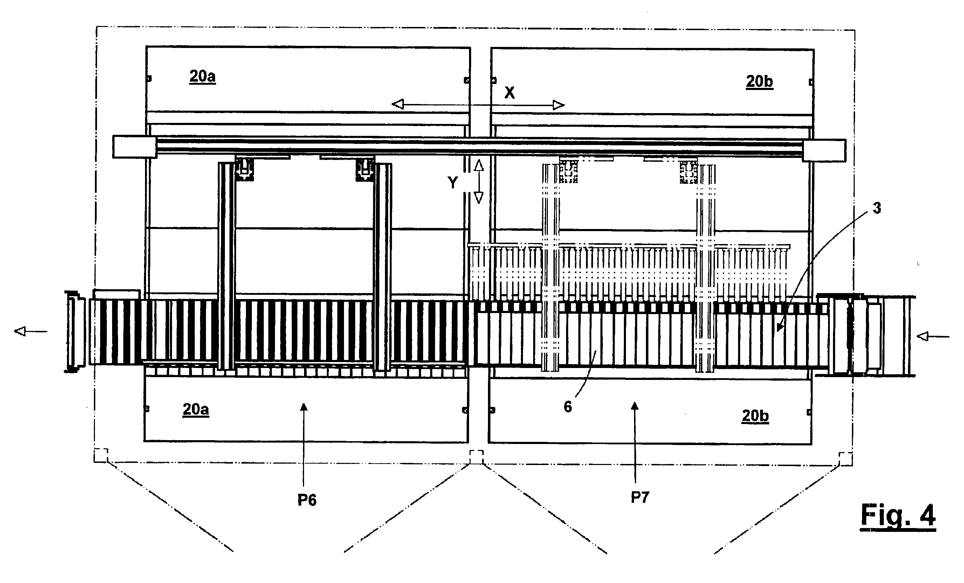

Die Figur 4 zeigt die Zwischenspeichereinrichtung von Fig. 3 in einer Ansicht von oben.

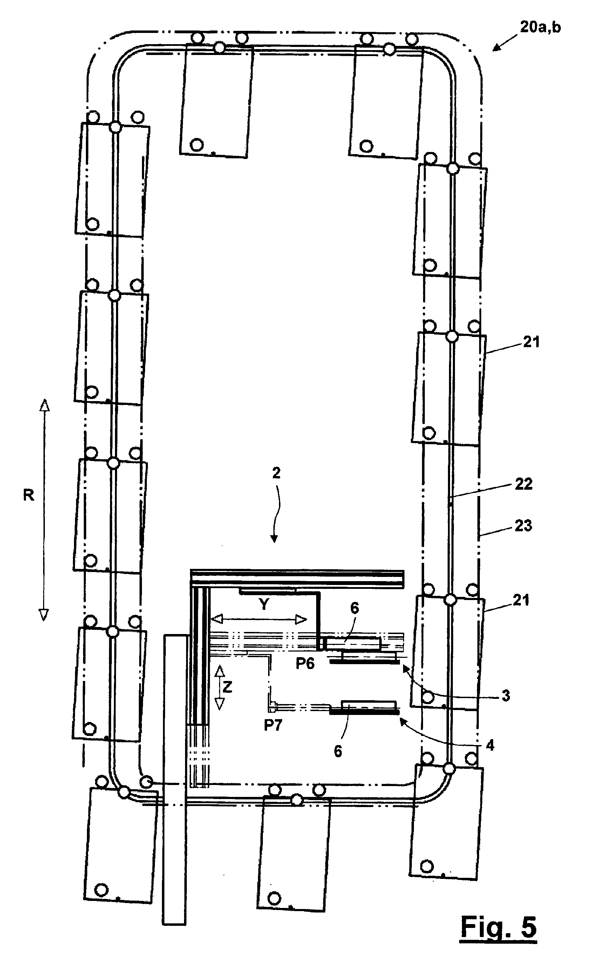

Die Fig. 5 zeigt die Zwischenspeichereinrichtung von Fig. 3 und 4 in einer Seitenansicht mit schematischer Darstellung der zwei verschiedenen Positionen P6 und P7 des Handlingroboters 2. Diese Figur ist stark vereinfacht, um die wesentlichen Komponenten zu verdeutlichen. Hier ist jedoch klar ersichtlich, dass sich der Handlingroboter 2 innerhalb einer Paternoster-Schlaufe befindet. Eine Anzahl von Paternoster-Speicherbehältern 21, die über eine Verbindungskette 22 gleichzeitig in Bewegung setzbar sind, laufen in einer wählbaren Rotationsrichtung R um und bilden so die erwähnte Paternoster-Schlaufe. Auf diese Weise lässt sich jeder einzelne Paternoster-Speicherbehälter 21 nach Bedarf leicht in die Nachbarschaft bzw. Reichweite des Handlingroboters 2 bringen. Die Speicherbehälter 21 sind leicht schräggestellt, um die zuverlässige Lagerung der Produkteinheiten 6 selbst bei Bewegung sicherzustellen. Zudem sind Führungen 23 vorgesehen, um pendelnde Bewegungen der Speicherbehälter 21 beim Anfahren und Stoppen des Paternosters zu vermeiden.

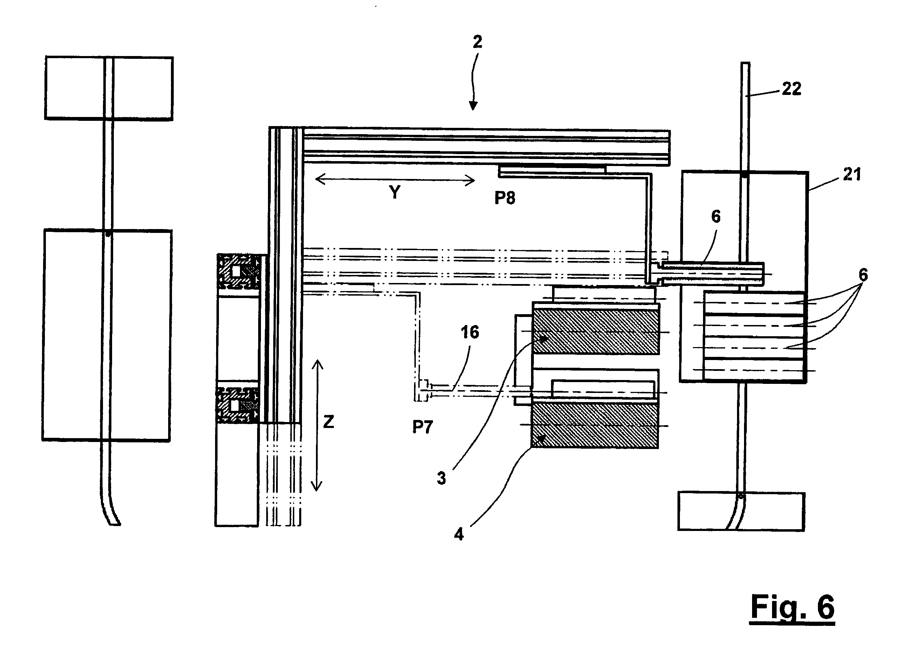

Die Fig. 6 zeigt zwecks weiterer Verdeutlichung noch eine vergrösserte Darstellung zweier verschiedener Positionen des Handlingroboters 2. Angedeutet sind hier in schematischer Weise zwei Positionen P7 und P8 des Handlingroboters 2, wobei P8 (ausgezogene Linien) die Lage des Handlingroboters 2 bei der Übergabe/Übernahme von Produkteinheiten 6 vom Paternoster-Speicherbehälter 21 und P7 (gestrichelte Linien) die Lage des Handlingroboters 2 bei der Übergabe von Produkteinheiten 6 an das zweite Transportband 4 andeutet.

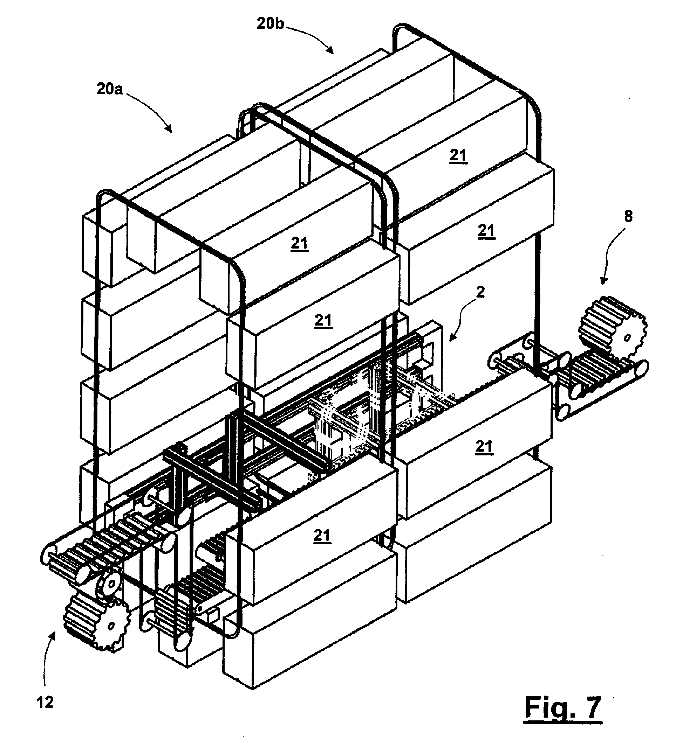

Die Fig. 7 zeigt schliesslich noch eine räumliche Ansicht der Zwischenspeichereinrichtung gemäss Fig. 3. Auch hier ist klar erkennbar, dass sich der Handlingroboter 2 innerhalb der Paternoster-Schlaufen befindet. Die Fördereinheit 8 (Eingangsseite) liefert Produkteinheiten an das erste Transportband 3, während die weitere Fördereinheit 12 (Ausgangsseite) Produkteinheiten von dem zweiten Transportband 4 aufnimmt.

Die Ablaufsequenzen bei der Verwendung einer Paternoster-Speichereinrichtung haben natürlich eine sehr grosse Ähnlichkeit wie die Ablaufsequenzen bei der Verwendung einer Hochregal-Speichereinrichtung. Es wird deshalb auf die diesbezüglichen Beschreibungsteile verwiesen. Ein wesentlicher Unterschied besteht natürlich darin, dass bei der beispielhaft beschriebenen Paternoster-Lösung keine Schwenkbewegungen notwendig sind. Es sei allerdings darauf hingewiesen, dass selbstverständlich auch eine Hochregal-Speichereinrichtung in Bezug zum Handlingroboter 2 in ähnlicher Weise angeordnet werden kann, so dass für die Zwischenspeicherung keine Schwenkbewegungen notwendig sind.

Die Steuerung der Ablaufsequenzen sowie die Steuerung/Regelung der Bewegungen des Handlingroboters 2 im Zusammenspiel mit den Steuerungen des Zwischenspeichers, der Fördereinheit 8 und der weiteren Fördereinheit 12 ist dem Fachmann grundsätzlich wohlbekannt und deshalb nicht Gegenstand dieser Beschreibung. Ähnliches gilt natürlich auch für die miteinzubeziehende Sensortechnik, mit der beispielsweise Vorhandensein, momentane Positionierung und Lückenlosigkeit bzw. Lückenhaftigkeit von Produkteinheiten 6 auf den Transportbändern detektiert und ausgewertet wird, um das Zusammenspiel aller erwähnter Vorrichtungen und Abläufe möglichst störungsfrei zu gewährleisten.

### Bezugsziffernliste

- 1: Zwischenspeichereinrichtung
- 2: Handlingroboter
- 3: erstes Transportband (anliefernd)
- 4: zweites Transportband (ausliefernd)
- 5: Hochregal-Speichereinrichtung
- 6: Produkteinheit
- 7: Erfassungseinrichtung
- 8: Fördereinheit
- 9: Transportkette
- 10: Fördergondeln
- 11: Produktaufnahme
- 12: weitere Fördereinheit
- 13: weitere Transportkette
- 14: weitere Fördergondel
- 15: Speicherbehälter
- 16: Erfassungsdorn
- 17: Schublade

- 20a,b: Paternoster-Einheiten
- 21: Paternaster-Speicherbehälter
- 22: Verbindungskette
- 23: Führung
- P1,6: Pos. 1,6 d. Handlingroboters (Übernahme vom 1. Transportband)
- P2,7: Pos. 2,7 d. Handlingroboters (Übergabe ans 2. Transportband)
- P3: Pos. 3 d. Handlingroboters (analog P1)
- P4: Pos. 4 d. Handlingroboters (analog P2)
- P5,8: Pos. 5,8 d. Handlingroboters (Übergabe/Übernahme v. Speicherbehält.)
- S1: Schwenkbewegung des Handlingroboters
- S2: Schwenkbewegung des Speicherbehälters
- R: Rotationsrichtung (Paternoster)

## Patentansprüche

1. Vorrichtung zur Übernahme, Zwischenspeicherung und Weitergabe von länglichen, hohlzylindrischen Produkteinheiten (6), vorzugsweise Tuben, Hülsen oder Dosen, die von einer Produktionslinie kommen;
- mit einer anliefernden Fördereinrichtung in der Form eines ersten Transportbandes (3),
- mit einer kontinuierlich ausliefernden Fördereinrichtung in der Form eines zweiten Transportbandes (4), wobei
- das erste und das zweite Transportband (3,4) in einer Übergabezone horizontal übereinanderliegend angeordnet sind, und
- ein Zwischenspeicher in der Übergabezone angeordnet ist, und
- ein Handlingroboter (2) im Bereich der Übergabezone zwischen den Fördereinrichtungen und dem Zwischenspeicher angeordnet ist,
- der Zwischenspeicher eine Hochregal-Speichereinrichtung (5) oder eine Paternoster-Speichereinrichtung ist,
- der Handlingroboter (2) dazu ausgelegt ist, entweder (a) eine Anzahl von Produkteeinheiten (6) vom ersten Transportband (3) zu nehmen und dem zweiten Transportband (4) oder dem Zwischenspeicher zuzuführen, oder (b) eine Anzahl von Produkteeinheiten (6) dem Zwischenspeicher zu entnehmen und dem zweiten Transportband (4) zuzuführen, und weiterhin auch dazu ausgelegt ist, dabei eine Angleichung von Position und Geschwindigkeit an das erste oder an das zweite Transportband (3, 4) vorzunehmen.

2. Vorrichtung nach Patentanspruch 1, **dadurch gekennzeichnet, dass** der Handlingroboter (2) eine Erfassungseinrichtung (7) mit einer Anzahl gleichbeabstandet nebeneinanderliegender Erfassungsdorne (16) aufweist.

3. Vorrichtung nach Patentanspruch 2, **dadurch gekennzeichnet, dass** die Erfassungsdorne (16) in die länglichen, hohlzylindrischen Produkteinheiten (6) ein- und ausführbar sind um diese zu erfassen und zu transportieren.

4. Vorrichtung nach einem der Patentansprüche 2 bis 3, **dadurch gekennzeichnet, dass** der Handlingroboter (2) mindestens für Linearbewegungen in X, Y und Z-Richtung ausgelegt ist, wobei die X-Richtung parallel zur Förderrichtung des ersten und des zweiten Transportbandes (3,4) verläuft und im Vergleich zur Y und Z-Richtung den grössten Transportweg aufweist.

5. Vorrichtung nach einem der Patentansprüche 1 bis 4, **dadurch gekennzeichnet, dass** eine erste Steuerungseinrichtung für den Zwischenspeicher mit einer zweiten Steuerungseinrichtung für den Handlingroboter (2) zusammengeschaltet ist, oder dass diese beiden Steuerungsvorrichtungen in einer einzigen gemeinsamen Steuerungseinrichtung vereint sind.

6. Verfahren zum Betrieb einer Vorrichtung zur Übernahme, Zwischenspeicherung und Weitergabe von länglichen, hohlzylindrischen Produkteinheiten (6), vorzugsweise Tuben, Hülsen oder Dosen, die von einer Produktionslinie kommen;
- mit einer anliefernden Fördereinrichtung in der Form eines ersten Transportbandes (3),
- mit einer kontinuierlich ausliefernden Fördereinrichtung in der Form eines zweiten Transportbandes (4), wobei
- das erste und das zweite Transportband (3,4) in einer Übergabezone horizontal übereinanderliegend angeordnet sind, und
- ein Zwischenspeicher in der Form einer Hochregal-Speichereinrichtung (5) oder einer Paternoster-Speichereinrichtung in der Übergabezone angeordnet ist, und
- ein Handlingroboter (2) im Bereich der Übergabezone zwischen den Fördereinrichtungen und dem Zwischenspeicher angeordnet ist und zur Ausführung einer Horizontalbewegung parallel zur Erstreckung der Fördereinrichtungen ausgebildet ist,
der Handlingroboter (2) entweder
(a) nach Angleichung von Position und Geschwindigkeit an das erste Transportband eine Anzahl von Produkteeinheiten (6) vom ersten Transportband (3) nimmt und danach
- nach Angleichung von Position und Geschwindigkeit an das zweite Transportband (4) die dem ersten Transportband (3) entnommenen Produkteeinheiten (6) dem zweiten Transportband (4) zuführt, oder
- die dem ersten Transportband (3) entnommenen Produkteeinheiten (6) dem Zwischenspeicher zuführt,
oder
(b) die dem Zwischenspeicher entnommenen Produkteeinheiten (6) nach Angleichung von Position und Geschwindigkeit an das zweite Transportband (4) dem zweiten Transportband (4) zuführt.

7. Verfahren nach Patentanspruch 6, **dadurch gekennzeichnet, dass** der Handlingroboter (2) im Falle der Zuführung von Produkteeinheiten (6) zum zweiten Transportband (4) diese dem zweiten Transportband (4) in einer Weise zuführt, dass die Produkteeinheiten (6) auf dem zweiten Transportband (4) lückenlos angeordnet sind.

8. Verfahren nach Patentanspruch 6, **dadurch gekennzeichnet, dass** im Falle der Zuführung von Produkteeinheiten (6) vom ersten Transportband (3) zum zweiten Transportband (4) nur Linearbewegungen ausgeführt werden.

9. Verfahren nach Patentanspruch 6, **dadurch gekennzeichnet, dass** im Falle der Zuführung von Produkteeinheiten (6) vom ersten Transportband (3) zum Zwischenspeicher oder vom Zwischenspeicher zum zweiten Transportband (4) nur Linearbewegungen ausgeführt werden.

10. Verfahren nach Patentanspruch 6, **dadurch gekennzeichnet, dass** der Zwischenspeicher eine Hochregal-Speichereinrichtung (5) ist und im Falle der Zuführung von Produkteeinheiten (6) vom ersten Transportband (3) zur Hochregal-Speichereinrichtung (5) oder im Falle der Zuführung von Produkteeinheiten (6) von der Hochregal-Speichereinrichtung (5) zum zweiten Transportband (4) neben Linearbewegungen eine Schwenkbewegung um eine parallel zur Förderrichtung des ersten und des zweiten Transportbandes (3,4) verlaufende Achse ausgeführt wird.

11. Verfahren nach Patentanspruch 6, **dadurch gekennzeichnet, dass** der Zwischenspeicher eine Paternoster-Speichereinrichtung ist und im Falle der Zuführung von Produkteeinheiten (6) vom ersten Transportband (3) zur Paternoster-Speichereinrichtung oder im Falle der Zuführung von Produkteeinheiten (6) von der Paternoster-Speichereinrichtung zum zweiten Transportband (4) nur Linearbewegungen ausgeführt werden.

12. Verfahren nach Patentanspruch 11, **dadurch gekennzeichnet, dass** die Paternoster-Speichereinrichtung mindestens eine, vorzugsweise jedoch zwei, unabhängig bewegbare Paternoster-Einheiten aufweist und dass eine Steuerungseinrichtung für die mindestens eine Paternoster-Einheit mit einer zweiten Steuerungseinrichtung für den Handlingroboter (2) in einer Weise zusammenwirken, dass schnelle Übernahmen, Zwischenspeicherungen und Weitergaben von Produkteinheiten unter Minimierung der Paternoster-Bewegungen ausführbar sind.

13. Verfahren nach Patentanspruch 12, **dadurch gekennzeichnet, dass** schnelle Übernahmen, Zwischenspeicherungen und Weitergaben von Produkteinheiten erzielt werden indem leere und/oder volle Paternoster-Speicherbehälter der Paternoster-Einheiten laufend in der Nachbarschaft des ersten und des zweiten Transportbandes (3,4) bereitgestellt werden.

## Claims

1. Device for receiving, temporarily storing and forwarding elongate, hollow-cylindrical product units (6), preferably tubes, sleeves or cans which come from a production line;
- comprising a supplying conveying device in the form of a first conveyor belt (3),
- comprising a continuously delivering conveying device in the form of a second conveyor belt (4),
- the first and the second conveyor belt (3, 4) being arranged horizontally above one another in a transfer zone, and
- a temporary storage device being arranged in the transfer zone, and
- a handling robot (2) being arranged in the region of the transfer zone between the conveying devices and the temporary storage device,
- the temporary storage device being a high-rack storage device (5) or a paternoster storage device,
- the handling robot (2) being designed either (a) to take a number of product units (6) from the first conveyor belt (3) and to supply them to the second conveyor belt (4) or the temporary storage device, or (b) to remove a number of product units (6) from the temporary storage device and to supply them to the second conveyor belt (4), and also being designed to adapt the position and speed to the first or to the second conveyor belt (3, 4).

2. Device according to Claim 1, **characterised in that** the handling robot (2) has a gripping device (7) with a number of equidistant gripping bars (16) adjacent to one another.

3. Device according to Claim 2, **characterised in that** the gripping bars (16) are able to be inserted into and withdrawn from the elongate, hollow-cylindrical product units (6) in order to grip and transport said product units.

4. Device according to one of Claims 2 to 3, **characterised in that** the handling robot (2) is designed at least for linear movements in the X-, Y- and Z-directions, the X-direction extending parallel to the direction of conveyance of the first and the second conveyor belt (3, 4) and having the largest transport path in comparison with the Y- and Z-directions.

5. Device according to one of Claims 1 to 4, **characterised in that** a first control device for the temporary storage device is connected together with a second control device for the handling robot (2), or in that said two control devices are combined in a single common control device.

6. Method for operating a device for receiving, temporarily storing and forwarding elongate, hollow-cylindrical product units (6), preferably tubes, sleeves or cans which come from a production line;
- comprising a supplying conveying device in the form of a first conveyor belt (3),
- comprising a continuously delivering conveying device in the form of a second conveyor belt (4),
- the first and the second conveyor belt (3, 4) being arranged horizontally above one another in a transfer zone, and
- a temporary storage device in the form of a high-rack storage device (5) or a paternoster storage device being arranged in the transfer zone, and
- a handling robot (2) being arranged in the region of the transfer zone between the conveying devices and the temporary storage device and being configured for performing a horizontal movement parallel to the extension of the conveying devices,
the handling robot (2) either
(a) taking a number of product units (6) from the first conveyor belt (3), after adapting the position and speed to the first conveyor belt and then
- supplying the product units (6) removed from the first conveyor belt (3) to the second conveyor belt (4), after adapting the position and speed to the second conveyor belt (4) or
- supplying the product units (6) removed from the first conveyor belt (3) to the temporary storage device,
or
(b) supplying the product units (6) removed from the temporary storage device to the second conveyor belt (4), after adapting the position and speed to the second conveyor belt (4).

7. Method according to Claim 6, **characterised in that** in the case of supplying product units (6) to the second conveyor belt (4), the handling robot (2) supplies said product units to the second conveyor belt (4) such that the product units (6) are arranged without gaps on the second conveyor belt (4).

8. Method according to Claim 6, **characterised in that** in the case of supplying product units (6) from the first conveyor belt (3) to the second conveyor belt (4), only linear movements are performed.

9. Method according to Claim 6, **characterised in that** in the case of supplying product units (6) from the first conveyor belt (3) to the temporary storage device or from the temporary storage device to the second conveyor belt (4), only linear movements are performed.

10. Method according to Claim 6, **characterised in that** the temporary storage device is a high-rack storage device (5) and in the case of supplying product units (6) from the first conveyor belt (3) to the high-rack storage device (5) or in the case of supplying product units (6) from the high-rack storage device (5) to the second conveyor belt (4), a pivoting movement about an axis extending parallel to the direction of conveyance of the first and the second conveyor belt (3, 4) is performed in addition to linear movements.

11. Method according to Claim 6, **characterised in that** the temporary storage device is a paternoster storage device and, in the case of supplying product units (6) from the first conveyor belt (3) to the paternoster storage device or in the case of supplying product units (6) from the paternoster storage device to the second conveyor belt (4), only linear movements are performed.

12. Method according to Claim 11, **characterised in that** the paternoster storage device has at least one, preferably two, independently movable paternoster units, and **in that** a control device for the at least one paternoster unit and a second control device for the handling robot (2) cooperate such that rapid receiving, temporary storing and forwarding of the product units may be performed whilst minimising the paternoster movements.

13. Method according to Claim 12, **characterised in that** rapid receiving, temporary storing and forwarding of the product units are achieved by empty and/or full paternoster storage containers of the paternoster units being continuously provided in the vicinity of the first and the second conveyor belt (3, 4).

## Revendications

1. Dispositif pour la réception, le stockage intermédiaire et le transfert d'unités de produit (6) oblongues, en forme de cylindres creux, de préférence des tubes, des manchons ou des boîtes venant d'une ligne de production ;
- avec un dispositif de transport d'alimentation sous la forme d'un premier tapis convoyeur (3),
- avec un dispositif de transport de distribution continue, sous la forme d'un deuxième tapis convoyeur (4), dans lequel
- le premier et le deuxième tapis convoyeurs (3, 4) sont agencés horizontalement l'un au-dessus de l'autre dans une zone de transfert, et
- un stockage intermédiaire est agencé dans la zone de transfert, et
- un robot de manutention (2) est agencé entre le dispositif de transport et le stockage intermédiaire dans la région de la zone de transfert,
- le stockage intermédiaire est un dispositif de stockage à étagères hautes (5) ou un dispositif de stockage pater-noster,
- le robot de manutention (2) est conçu pour (a) prélever un certain nombre d'unités de produit (6) sur le premier tapis convoyeur (3) et les disposer sur le deuxième tapis convoyeur (4) ou dans le stockage intermédiaire, ou pour (b) prélever un certain nombre d'unités de produit (6) dans le stockage intermédiaire et les disposer sur le deuxième tapis convoyeur (4), tout en étant également conçu pour effectuer une adaptation de la position et de la vitesse par rapport au premier ou au deuxième tapis convoyeur (3, 4).

2. Dispositif selon la revendication 1, **caractérisé en ce que** le robot de manutention (2) comporte un dispositif de saisie (7) avec un certain nombre d'épines de saisie (16) disposées côte à côte, à distance égale les unes des autres.

3. Dispositif selon la revendication 2, **caractérisé en ce que** les épines de saisie (16) peuvent être introduites dans les unités de produit (6) oblongues en forme de cylindres creux et ressorties de celles-ci, afin de saisir celles-ci et de les transporter.

4. Dispositif selon l'une des revendications 2 à 3, **caractérisé en ce que** le robot de manutention (2) est conçu pour effectuer au moins des mouvements linéaires dans les directions X, Y et Z, dans lequel la direction X s'étend parallèlement à la direction de transport du premier et du deuxième tapis convoyeur (3, 4) et présente le trajet de transport le plus long en comparaison avec ceux des directions Y et Z.

5. Dispositif selon l'une des revendications 1 à 4, **caractérisé en ce qu'**un premier dispositif de commande pour le stockage intermédiaire est raccordé à un deuxième dispositif de commande pour le robot de manutention (2), ou **en ce que** ces deux dispositifs de commande sont réunis en un seul et même dispositif de commande.

6. Procédé pour le fonctionnement d'un dispositif pour la réception, le stockage intermédiaire et le transfert d'unités de produit (6) oblongues en forme de cylindres creux, de préférence des tubes, des manchons ou des boîtes, venant d'une ligne de production ;
- avec un dispositif de transport d'alimentation sous la forme d'un premier tapis convoyeur (3),
- avec un dispositif de transport de distribution continue, sous la forme d'un deuxième tapis convoyeur (4), dans lequel
- le premier et le deuxième tapis convoyeurs (3, 4) sont agencés horizontalement l'un au-dessus de l'autre dans une zone de transfert, et
- un stockage intermédiaire sous la forme d'un dispositif de stockage à étagères hautes (5) ou d'un dispositif de stockage pater-noster est agencé dans la zone de transfert, et
- un robot de manutention (2) est agencé entre le dispositif de transport et le stockage intermédiaire, dans la région de la zone de transfert, tout en étant conçu pour effectuer un mouvement horizontal parallèle à l'étendue des dispositifs de transport, dans lequel
- le robot de manutention (2) est conçu soit
(a) pour prélever un certain nombre d'unités de produit (6) sur le premier tapis convoyeur (3), après une adaptation de la position et de la vitesse par rapport au premier tapis convoyeur (3), puis
- fournir les unités de produit (6) prélevées sur le premier tapis convoyeur (3) au deuxième tapis convoyeur (4), après une adaptation de la position et de la vitesse par rapport au deuxième tapis convoyeur (4), ou
- fournir les unités de produit (6) prélevées sur le premier tapis convoyeur (3) au stockage intermédiaire,
soit
(b) pour fournir les unités de produit (6) prélevées dans le stockage intermédiaire au deuxième tapis convoyeur (4), après une adaptation de la position et de la vitesse par rapport au deuxième tapis convoyeur (4).

7. Procédé selon la revendication 6, **caractérisé en ce que** dans le cas d'une alimentation d'unités de produit (6) vers le deuxième tapis convoyeur (4), le robot de manutention (2) délivre celles-ci au deuxième tapis convoyeur (4) de manière à ce que les unités de produit (6) soient disposées sans interruption sur le deuxième tapis convoyeur (4).

8. Procédé selon la revendication 6, **caractérisé en ce que** seuls des mouvements linéaires sont effectués dans le cas d'une alimentation d'unités de produit (6) du premier tapis convoyeur (3) vers le deuxième tapis convoyeur (4).

9. Procédé selon la revendication 6, **caractérisé en ce que** seuls des mouvements linéaires sont effectués dans le cas d'une alimentation d'unités de produit (6) du premier tapis convoyeur (3) vers le sous-toiture ou du stockage intermédiaire vers le deuxième tapis convoyeur (4).

10. Procédé selon la revendication 6, **caractérisé en ce que** le stockage intermédiaire est un dispositif de stockage à étagères hautes (5) et, dans le cas d'une alimentation d'unités de produit (6) de la première bande de transport (3) vers le dispositif de stockage à étagères hautes (5) ou dans le cas d'une alimentation d'unités de produit (6) du dispositif de stockage à étagères hautes (5) vers le deuxième tapis convoyeur (4), un mouvement de pivotement autour d'un axe s'étendant parallèlement à la direction de transport du premier et du deuxième tapis convoyeur (3, 4) est effectué en plus des mouvements linéaires.

11. Procédé selon la revendication 6, **caractérisé en ce que** le stockage intermédiaire est un dispositif de stockage pater-noster, et seuls des mouvements linéaires sont effectués dans le cas d'une alimentation d'unités de produit (6) du premier tapis convoyeur (3) vers le dispositif de stockage paternoster ou dans le cas d'une alimentation d'unités de produit (6) du dispositif de stockage pater-noster vers le deuxième tapis convoyeur (4).

12. Procédé selon la revendication 11, **caractérisé en ce que** le dispositif de stockage pater-noster comporte au moins une, mais de préférence deux unités pater-noster déplaçables indépendamment l'une de l'autre, et **en ce qu'**un dispositif de commande pour l'au moins une unité pater-noster coopère avec un deuxième dispositif de commande pour le robot de manutention (2), de manière à pouvoir exécuter rapidement des opérations de réception, de stockage intermédiaire et de transfert d'unités de produit (6) tout en minimisant les mouvements pater-noster.

13. Procédé selon la revendication 12, **caractérisé en ce que** la réception, le stockage intermédiaire et le transfert d'unités de produit (6) peuvent être réalisés rapidement en mettant continuellement des récipients de stockage pater-noster vides et/ou pleins des unités pater-noster à disposition à proximité du premier et du deuxième tapis convoyeur (3, 4).
